# EUROPÄISCHE PATENTSCHRIFT

(11) **EP 0 985 642 B1**
(45) Veröffentlichungstag und Bekanntmachung des Hinweises auf die Patenterteilung: **05.11.2003**
(21) Anmeldenummer: 99810597.7
(22) Anmeldetag: 06.07.1999
(51) Int. Cl.: C03B 19/10, C03B 19/08

(54) **Verfahren und Vorrichtungen zum Herstellen von Zuschlagstoffen aus blähbaren Grün-Formlingen für Leichtbaustoffe**
Methods and apparatuses for making addition-stuff of inflatable green preforms for light building materials
Procédés et appareils pour la fabrication de matières additionelles de préformes vertes gonflables pour matériaux de constructions légères

(30) Priorität: 13.08.1998 CH 166898
(43) Veröffentlichungstag der Anmeldung: 15.03.2000
(73) Patentinhaber: Von Roll Umwelttechnik AG, 8005 Zürich (CH)
(72) Erfinder: Ebel, Jörn, 8050 Zürich (CH); Hugentobler, Ernst, 8615 Wermatswil (CH)
(74) Vertreter: Patentanwälte Schaad, Balass, Menzl & Partner AG

(56) Entgegenhaltungen:
- DE-A- 19 545 187
- DE-A- 19 545 188
- US-A- 3 508 742

## Beschreibung

Die Erfindung betrifft ein Verfahren und eine Vorrichtung zum Herstellen von Zuschlagstoffen aus blähbaren Grün-Formlingen für Leichtbaustoffe, wie z.B. Blähton, Mineralschaum, Schaum- und Blähglas usw., gemäss den Merkmalen der Oberbegriffe der Ansprüche 1 und 9.

Aus der Druckschrift DE-A-195 45 188 sind ein Verfahren und eine Vorrichtung bekannt, in der aus Grün-Formlingen Zuschlagstoff für die Herstellung von Leichtbaustoffen hergestellt werden. Um die Formlinge während des ganzen Verfahrens in Bewegung zu halten, damit sie eine gleichmässige Erwärmung erfahren und vor allem auch während des Sinterns und Blähens keine Agglomerationen bilden, wird das Verfahren in zwei getrennten Drehrohröfen durchgeführt. Im ersten Drehrohrofen werden die Grün-Formlinge getrocknet und gehärtet und im zweiten Drehrohrofen werden die gehärteten Formlinge bis zum Sintern erhitzt, gebläht und bis zur Erreichung der Formstabilität abgekühlt. Durch das Einbetten der Formlinge in ein Wärmeübertragungsmedium, das zugleich als Trennmittel dient und der Agglomeration der Formlinge entgegenwirkt, wird eine gleichmässigere Erwärmung der Formlinge erreicht. Für die unterschiedlichen Temperaturen in den beiden Öfen werden zwei unterschiedliche Wärmeübertragungsmedien eingesetzt.

Bei diesem Verfahren kommt es nur im ersten Ofen zu einem üblicherweise auftretenden Materialabtrag an den sehr leichten und auf Beschädigungen anfälligen Formlingen, da die Formlinge beim Erreichen des zweiten Ofens bereits gehärtet sind. Das abgetragene Material kann das Trennmittel im zweiten Ofen nicht mehr verunreinigen und so dessen der Agglomeration der Formlinge entgegenwirkenden Eigenschaften nicht beeinträchtigen.

Nachteilig an diesem Verfahren und dieser Vorrichtung ist die Tatsache, dass während dem Verarbeiten der Formlinge ein vorzeitiges Ausgasen derselben auftreten kann, was unerwünscht grosse Poren oder ungleichmässige Eigenschaften, wie Festigkeit und Wasseraufnahme, im hergestellten Zuschlagstoff zur Folge hat. Nachteilig ist weiter die Tatsache, dass die Formlinge während dem Blähen und Sintern deformiert oder gar verdichtet werden, was einen Zuschlagstoff für Leichtbaustoffe mit reduzierter Festigkeit und höherer Dichte zur Folge hat.

Der in der DE-A-195 45 188 erwähnte Blähofen kann auch ein fluidisiertes Bett sein. Dies hat jedoch zur Folge, daß das Wärme-übertragungsmedium, das zugleich als Trennmittel dient, durch die Bettbewegung von den Formlingen abgetragen wird und die Formlinge beim Blähvorgang zusammens intern.

Es ist Aufgabe der vorliegenden Erfindung einen qualitativ hochwertigen Zuschlagstoff für die Herstellung von Leichtbaustoffen wirtschaftlich vorteilhaft herzustellen.

Diese Aufgabe wird gelöst durch ein Verfahren mit den Merkmalen des Anspruches 1 und eine Vorrichtung mit den Merkmalen des Anspruches 9.

Bei dem erfindungsgemässen Verfahren werden die Formlinge während des Sinterns und Blähens nicht wie in einem sich ständig drehenden Drehrohrofen umgewälzt und durchmischt, sondern durch eine pendelnde Bewegung des sie aufnehmenden Behältnisses wechselseitig umgewälzt und durchmischt. Ein wesentlicher Unterschied ist darin zu sehen, dass beim Umwälzen und Durchmischen im Drehrohrofen die Formlinge von der Innenwand sehr hoch mitgeführt und angehoben werden und aus einer relativ grossen Höhe abstürzen können, wogegen beim durch die pendelnde Bewegung verursachten wechselseitigen Umwälzen und Durchmischen die Formlinge nur auf eine Höhe mitgeführt werden, welche ausreicht um die Formlinge in Bewegung zu halten. Durch die Pendelbewegung wird die Bewegungsrichtung ständig umgekehrt, so dass die Formlinge eine hiermit als wechselseitiges Umzuwälzen bezeichnete Bewegung erfahren. Die kinetische Energie der wechselseitig umgewälzten Formlinge ist wesentlich geringer, als diejenige der im Drehrohrofen abstürzenden Formlinge, weshalb beim erfindungsgemässen Verfahren während dem Sintern und Blähen eine Beschädigung der Formlinge mit nur geringer Wahrscheinlichkeit auftritt.

Vorteilhafterweise werden die Formlinge auf einer pendelnden, ungleichmässig, vorzugsweise wellenförmig ausgestalteten Auflagefläche wechselseitig umgewälzt und durchmischt. Die Wellenberge und -täler erstrecken sich dabei in etwa in Richtung der Verarbeitungsrichtung. Bei einer glatten Auflagefläche können sich die Formlinge ungebremst bis zum momentan tiefsten Punkt des sie aufnehmenden Behältnisses bewegen. Die kinetische Energie, die sie dabei erhalten, kann beim gegenseitigen Aufprall der Formlinge zu Beschädigungen führen. Bei einer ungleichmässig gestalteten Auflagewand wirken dagegen die Erhöhungen, z.B. die Wellenberge, bremsend auf die an der Wand entlang abstürzenden Formlinge. Ihre kinetische Energie wird vermindert und die Gefahr einer Beschädigung reduziert.

Vorteilhaft ist es, die Formlinge während der Sinter- und Blähphase durch thermisch gut voneinander getrennte Wärmezonen hindurchzuführen, da so die Temperatur sehr gut reguliert werden und die Gefahr des vorzeitigen Ausgasens verringert werden kann. Durch ein direktes Beheizen der einzelnen Wärmezonen wird die genaue Regelbarkeit der Temperatur verbessert. Auch die klare thermische Trennung zwischen einer als Blähzone ausgestalteten Wärmezone und einer daran anschliessenden Abkühlzone ist sehr vorteilhaft, da die Formlinge nur so in der Blähzone bei einer definierten Temperatur gebläht und in der Abkühlzone kontrolliert und schnell abgekühlt werden können. Dies ist wichtig für ein gezieltes Einfrieren des geblähten Zustandes der Formlinge um das gewünschte Gefüge und damit Eigenschaften wie Härte, Festigkeit oder spezifisches Gewicht zu erlangen.

Können sich die während und nach dem Blähen an Volumen zunehmenden Formlinge auf eine grössere Auflagefläche verteilen, z.B. indem sie durch einen sich erweiternden Abschnitt des die Formlinge während des Sinterns und Blähens aufnehmenden Behältnisses transportiert werden, so verringert sich die Schichtdicke des aus Formlingen gebildeten Stroms. Dies trägt zu einem besser kontrollierbaren Abkühlprozess bei und verringert die Gefahr, dass sich die noch weichen sich ausdehnenden Formlinge gegenseitig beschädigen.

Werden die einzelnen Verfahrensschritte, wie Trocknen, Aufheizen, Blähen, Abkühlen in jeweils örtlich voneinander getrennten Vorrichtungen vollzogen, so kann während dieser Prozesse eine genauere Temperaturkontrolle und Temperaturregelung durchgeführt werden und die einzelnen Vorrichtungen können entsprechend den Behandlungserfordernissen ausgestaltet werden.

Noch einfacher und genauer ist die Temperaturregelung wenn die einzelnen, örtlich voneinander getrennten Verarbeitungsvorrichtungen im Wärmeverbund miteinander arbeiten und die Formlinge wärmeisoliert von einer Vorrichtung zur nächsten transportiert werden. Es treten so keine grossen Temperaturschwankungen auf und Energieverluste können vermieden werden.

Als Vorrichtung zur Herstellung von Zuschlagstoff für Leichtbaustoffe eignet sich bevorzugt eine Vorrichtung deren Sinter- und Blähvorrichtung als Pendelofen ausgestaltet ist. Dieser Pendelofen weist in Verarbeitungsrichtung gesehen hintereinander angeordnet einen Einlass und einen Auslass auf und eine sich in etwa in Verarbeitungsrichtung erstreckende Drehachse. Die Pendelbewegung des Pendelofens wird dabei durch eine Auslenkung um diese Drehachse bewirkt.

Ein zusätzlicher Vorteil ergibt sich, wenn der Pendelofen eine Innenwand aufweist, die zumindest in dem Bereich, in dem sie während des Pendelns als Auflagefläche für die Formlinge dient, ungleichförmig und vorzugsweise wellenförmig ausgestaltet ist.

Ein spezieller Vorteil ergibt sich dadurch, dass einzelne Wärmezonen im Pendelofen sehr einfach durch Zwischenwände voneinander thermisch getrennt werden können. Dadurch, dass nur ein Teil der Innenwand des Pendelofens als Auflagefläche für die Formlinge dient, - während es bei einem Drehrohrofen die gesamte Innenwand ist, - können die Zwischenwände an dem Teil der Innenwand des Pendelofens, der nicht als Auflagefläche dient, befestigt oder einstückig an diesen Teil der Innenwand angeformt sein ohne die Bewegung der Formlinge zu beeinträchtigen. Der Abstand der Zwischenwand zur Auflagefläche - hier als Durchlassöffnung bezeichnet, durch welchen die Formlinge von einer Wärmezone in die nächste transportiert werden, - kann auf diese Weise sehr klein gehalten werden. Dadurch ist nur noch ein geringer Temperaturaustausch zwischen den einzelnen Wärmezonen möglich.

Ebenfalls in dem Bereich der Innenwand, der nicht als Auflagefläche dient, können Brenner für ein direktes Beheizen der einzelnen Wärmezonen angeordnet werden, was die Temperaturregelung in den einzelnen Wärmezonen vereinfacht. Auf diese Weise kann eine Regelgenauigkeit von bis zu ± 10°C bei Temperaturen von 800°C bis 1300°C erreicht werden.

Eine besonders genaue Temperaturregelung lässt sich erreichen wenn die einzelnen Vorrichtungen, wie Trockenvorrichtung, Aufheizvorrichtung, Pendelofen, und Abkühlvorrichtung örtlich voneinander getrennt sind. Dabei wird unter örtlich voneinander getrennt verstanden, dass z.B. zwei unmittelbar aufeinanderfolgende Drehrohröfen als Trocken- und als Aufheizvorrichtung vorgesehen sein können, wobei der Auslass der Trockenvorrichtung direkt in den Einlass der Aufheizvorrichtung münden kann. Im Gegensatz dazu sind eine Trockenvorrichtung und eine Aufheizvorrichtung die in einem einzigen Drehrohrofen untergebracht sind, nicht örtlich voneinander getrennt.

Für einen wärmeisolierten Transport der Formlinge von einer Vorrichtung zur nächsten, sind vorteilhaft wärmeisolierte Hohlräume vorgesehen, die z.B. auch in Form eines in einen Einlass hineingreifenden Auslasses gebildet sein können, und in denen, je nach bedarf, entsprechende Fördermittel für den Transport der Formlinge angeordnet sind.

Eine Neigung des Pendelofens oder zumindest der Auflagefläche des Pendelofens in Verarbeitungsrichtung gegenüber der Horizontalen von bis zu 10° erlaubt eine kontinuierliche Beschickung und Entleerung des Pendelofens. Auch alle im Pendelofen ablaufenden Prozesse verlaufen kontinuierlich. Die Neigung richtet sich nach den Eigenschaften der zu verarbeitenden Formlinge und beträgt für Grün-Formlinge aus Altglas, Schlacke oder RCP-Granulat vorzugsweise 2° bis 5°.

Weitere bevorzugte Ausführungsformen sind Gegenstand weiterer abhängiger Ansprüche.

Anhand der Figuren 1 bis 3 wird im Folgenden die Erfindung beispielhaft erläutert. Es zeigen rein schematisch:
- Fig. 1: eine Vorrichtung zum Herstellen von Zuschlagstoffen für Leichtbaustoffe aus blähbaren Grün-Formlingen mit jeweils örtlich voneinander getrennten Verarbeitungsvorrichtungen;
- Fig. 2a: einen Längsschnitt durch den in Fig. 1 dargestellten Pendelofen;
- Fig. 2b: einen Schnitt entlang der Linie II-II in Fig. 2a;
- Fig. 3a: ein Schema des Temperaturverlaufs über dem Verfahrensweg;
- Fig. 3b: ein Schema der Schichtdicke des durch die Formlinge gebildeten Stroms in Abhängigkeit von den in Fig. 3a dargestellten Parametern Verfahrensweg und Temperatur; und
- Fig. 3c: ein Schema der von den Formlingen auf dem Verfahrensweg durchlaufenen Verarbeitungsvorrichtungen in Zuordnung zu den in den Fig. 3a und 3b dargestellten Schemata.

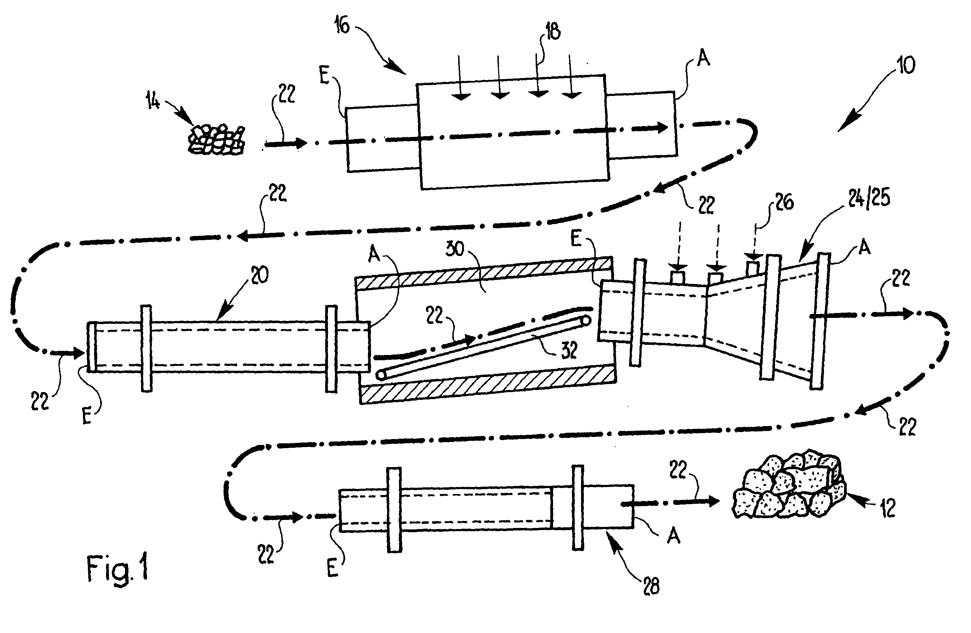

In Fig. 1 ist eine Vorrichtung 10 zum Herstellen von Zuschlagstoffen en 12 aus blähbaren Grün-Formlingen 14 für die Herstellung von Leichtbaustoffen dargestellt, bei der die einzelnen Verarbeitungsvorrichtungen 16, 20, 24, 28 örtlich voneinander getrennt sind.

Als Trockenvorrichtung 16 ist ein Bandtrockner vorgesehen, welcher in diesem Beispiel direkt mit Gas beheizt ist, dessen Zuführung durch erste Pfeile 18 angedeutet ist. Der Trockenvorrichtung 16 ist als Aufheizvorrichtung 20 ein Drehrohrofen nachgeordnet. In Verarbeitungsrichtung (22) der Aufheizvorrichtung 20 nachgelagert ist ein Behältnis 24 zum Sintern und Blähen angeordnet, das in Form eines Pendelofens 25 ausgestaltet ist. Der Pendelofen 25 ist wie der Bandtrockner direkt mit Gas beheizt, dessen Zuführung durch dritte Pfeile 26 angedeutet ist. Dem Pendelofen 25 ist eine Abkühlvorrichtung 28 nachgeordnet, die in diesem Beispiel als Drehrohrkühler ausgestaltet.

Aufheizvorrichtung 20, Pendelofen 25 und Abkühlvorrichtung 28 sind in ihrer Längsrichtung, die der Verarbeitungsrichtung 22 entspricht, leicht gegen die Horizontale geneigt (vgl. Fig. 1). Die Neigung beträgt nur bis zu etwa 10°, vorzugsweise 2° bis 5°, je nach den Eigenschaften des zu verarbeitenden Materials, und führt dazu, dass der jeweilige Einlass E höher liegt als der Auslass A. Die Dreh- bzw. Pendelbewegung dieser Verarbeitungsvorrichtungen 20, 24/25, 28 führt dann zusammen mit der Neigung dazu, dass alle Verarbeitungsvorrichtungen 20, 24/25, 28 inklusive des Pendelofens 25 kontinuierlich beschickt und entleert werden können ohne dass ein Fördermittel erforderlich wäre, etwa wie ein Transportband, welches üblicherweise im Bandtrockner 16 angeordnet, in Fig. 1 jedoch nicht dargestellt ist.

Die Verarbeitungsvorrichtungen 16, 20, 24/25, 28 sind untereinander durch wärmeisolierte Hohlräume 30 verbunden. In Fig. 1 ist beispielhaft nur ein Hohlraum 30 zwischen Aufheizvorrichtung 20 und Pendelofen 25 dargestellt. Für den Transport der Formlinge 14 von einer Verarbeitungsvorrichtung 16, 20, 24/25, 28 zur nächsten können, wo erforderlich, Fördermittel 32, wie z.B. ein Transportband gemäss Fig. 1 oder ein Kettenbecherwerk, in den wärmeisolierten Hohlräumen 30 vorgesehen sein.

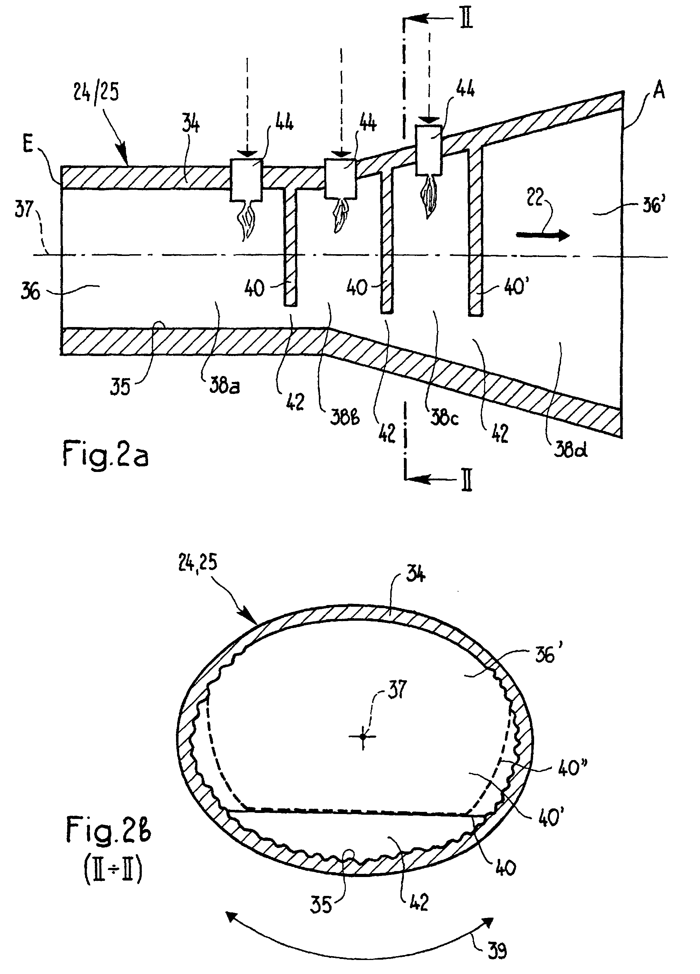

In Fig. 2a ist der Pendelofen 25 gemäss Fig. 1 im Längsschnitt dargestellt. Der Pendelofen 25 weist beispielsweise eine Aussenhülle aus Stahl auf welche im Innern mit Schamottsteinen ausgekleidet ist. Der Pendelofen 25 weist eine feuerfeste Innenwand 34, z.B. aus Schamottsteinen, auf, welche einen Innenraum 36 begrenzt. Ein Teil der Innenwand 34 dient während der hin und her Bewegung des Pendelofens 25 den Formlingen 14 als Auflagefläche 35. Diese Auflagefläche 35 ist wellenförmig ausgestaltet, wobei die Wellen in etwa in der Richtung der Längsachse des Pendelofens 25 ausgerichtet verlaufen, wie aus dem Querschnitt gemäss Fig. 2b ersichtlich. Der Innenraum 36 erweitert sich gegen den Auslass A hin trichterförmig, wobei der Querschnitt des Trichters 36' in diesem Beispiel ein liegendes Oval bildet, wie dies in Fig. 2b dargestellt ist. Der Querschnitt des Pendelofens 25 sowie des Trichters können auch kreisförmig ausgestaltet sein.

Diese in einen ovalen Trichter 36' mündende Erweiterung des Innenraumes 36 gewährleistet, dass die sich während des Blähens ausdehnenden Formlinge 14 auf eine grössere Auflagefläche 35 verteilen und sich so rascher abkühlen. Durch das schnellere Abkühlen und die Verteilung auf eine grössere Auflagefläche 35 wird die Gefahr einer Beschädigung der Formlinge 14 verringert. Die wellenförmige Ausgestaltung der Auflagefläche 35 trägt ebenfalls zur Verminderung dieser Gefahr bei.

In Richtung der Längsachse des Pendelofens 25 erstreckt sich eine Drehachse 37 des Pendelofens 25, um welche der Pendelofen 25 für die Pendelbewegung (Pfeil 39) ausgelenkt wird. Als vorteilhaft haben sich eine Auslenkung um bis zu 120° abhängig von den Eigenschaften, wie Gewicht, Oberflächenbeschaffenheit usw., der Formlinge ergeben und eine Pendelgeschwindigkeit von 4 bis 6 Pendelschwingungen in der Minute. Im gezeigten Beispiel liegt die Drehachse 37 in der Mitte des durch den Trichter 36' gebildeten Ovales.

Der Innenraum 36 ist in mehrere Wärmezonen 38a bis 38d geteilt, die jeweils durch Zwischenwände 40, 40' voneinander getrennt sind. Die Zwischenwände 40, 40' sind beispielsweise einstückig zumindest an den Teil der Innenwand 34 angeformt, wie in Fig. 2b durch die gestrichelte Linie 40" dargestellt, welcher nicht als Auflagefläche 35 dient. Eine bessere thermische Trennung wird natürlich erreicht, wenn die Zwischenwände 40, 40' auch über einen weiten Teil der Auflagefläche 35 mit der Innenwand 34 verbunden sind wie dies durch die durchgezogene Linie 40 in Fig. 2b dargestellt ist, so dass ein Wärmeaustausch zwischen den Wärmezonen 33a bis 33d jeweils nur über eine kleine Durchlassöffnung 42 möglich ist.

Die Wärmezonen 38a bis 38c sind durch Brenner 44 direkt beheizt. Die Wärmezone 38a dient zum Aufheizen der Formlinge 14. An sie schliesst eine Sinterzone 38b an, in der eine Temperatur um den Schmelzpunkt der Formlinge 14 herrscht. In der Sinterzone 38b kann ein vereinzeltes Blähen der Formlinge 14 einsetzen. Aus diesem Grund beginnt in diesem Bereich die Erweiterung des Innenraumes 36 zu einem Trichter 36'. In Verarbeitungsrichtung 22 gesehen folgen die eigentliche Blähzone 38c und eine erste Abkühlzone 38d, in der die Formlinge 14 schnell und kontrolliert auf die Einfriertemperatur gebracht werden, bei der sie in geblähter Form stabil sind. Zur Kühlung der Formlinge 14 kann ausserhalb des Auslasses A ein Gebläse angeordnet sein, dessen geförderte Luft in die ersten Abkühlzone 38d des Pendelofens 25 geblasen wird um die Formlinge zu kühlen. Durch die Zwischenwand 40' wird die Blähzone 38c so gut gegen die heranströmende, sich rasch über den heissen Formlingen 14 erwärmende Luft abgeschirmt, dass die Temperatur in dieser Wärmezone 38c dennoch sehr genau reguliert werden kann. Das direkte Heizen mittels Brenner 44 erleichtert diese Temperaturregelung zusätzlich.

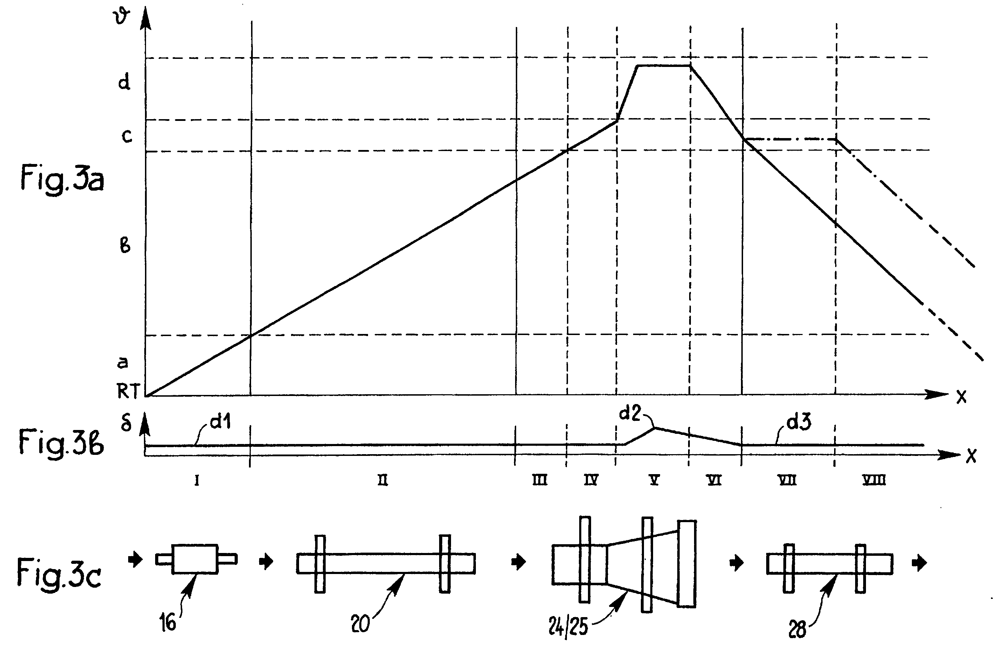

Die Fig. 3a bis 3c zeigen schematisch das Verfahren zur Herstellung des Zuschlagstoff es 12 aus blähbaren Grün-Formlingen 14. In Fig. 3a ist der Temperaturverlauf q über dem Verfahrensweg x dargestellt, wobei mit a der Temperaturbereich zum Trocknen I bezeichnet ist. Es folgen mit steigender Temperatur als weitere mit kleinen Buchstaben gekennzeichnete Temperaturbereiche: eine Aufheiztemperatur b, eine Sintertemperatur c und eine Blähtemperatur d. In Fig. 3b ist die Schichtdicke d des aus den Formlingen 14 gebildeten Stroms über dem Verfahrensweg x gezeigt und in Fig. 3b ist symbolisch zu dem jeweiligen Abschnitt I-VIII des Verfahrensweges x die Verarbeitungsvorrichtung 16, 20, 24/25, 28 abgebildet, welche von den Formlingen 14 durchlaufen wird.

Die Grün-Formlinge 14 werden zu Beginn des Verfahrens bei Raumtemperatur RT mit einer mässigen Schichtdicke d1 in die als Bandtrockner ausgestaltete Trockenvorrichtung 16 hineingegeben und in der Trockenphase I (= Abschnitt I des Verfahrensweges x) im Bereich der Trockentemperatur a bis auf etwa 200°C erwärmt. Anschliessend durchlaufen sie in der als Drehrohrofen ausgestaltete Aufheizvorrichtung 20 eine Aufheizphase II und werden in einem Temperaturbereich b, der noch unter dem Temperaturbereich des Sinterns c liegt, auf bis zu 800° aufgeheizt. Im Pendelofen 25 werden die Formlinge 14 in diesem Beispiel in Phase III immer noch in Temperaturbereich b bis auf die Sintertemperatur c weiter aufgeheizt. In der an die Aufheizzone 38a des Pendelofens 25 anschliessenden Sinterzone 38b werden die Formlinge 14 in der Sinterphase IV gesintert (Temperatur c) und gelangen anschliessend in die Blähzone 38c des Pendelofens 25, in der sie bei der Blähtemperatur d (Blähphase V) gebläht werden. Blähtemperatur d und Sintertemperatur c sind abhängig von der Zusammensetzung der Formlinge 14 und liegen zwischen 750°C und 900°C Sintertemperatur c und 850°C bis 1300°C Blähtemperatur d. Während des Blähens V nimmt die Schichtdicke d zunächst auf den Wert d2 zu, fällt dann aber noch während des Blähens V wieder ab, da sich die sich aufblähenden Formlinge 14 in dem sich zum Trichter 36' erweiternden Innenraum 36 des Pendelofens 25 auf eine grössere Auflagefläche 35 verteilen können. Auch während des Abkühlens VI, welches aus Fig. 3a als fallender Temperaturverlauf ersichtlich ist, in der ersten Abkühlzone 38d des Pendelofens 25 nimmt die Schichtdicke d weiter bis auf den Wert d3 ab. In einer zweiten Abkühlzone, die durch den Drehrohrkühler 28 gebildet wird werden die Formlinge, deren Strom in diesem Beispiel konstant auf einer Schichtdicke d3 bleibt, schliesslich bis auf Raumtemperatur RT abgekühlt, dargestellt als Abkühlphase VII und VIII, wobei dem eigentlichen Abkühlen VIII eine Haltephase VII vorgeschaltet sein kann, wobei die Haltephase VII als strichpunktierte Linie im Temperaturverlauf gemäss Fig. 3a dargestellt ist.

Auch bei dem hier vorgeschlagenen erfindungsgemässen Verfahren kann in allen oder einzelnen Abschnitten I bis VIII mit Trenn- bzw. Wärmeübertragungsmitteln gearbeitet werden. Selbstverständlich sind dann neben den evtl. notwendigen Fördermitteln 32 in den wärmeisolierten Hohlräumen 30 auch Siebanlagen zur Trennung der Formlinge 14 von diesen Trenn- bzw. Wärmeübertragungsmitteln vorzusehen.

Vorrichtung und Verfahren können in einzelnen Details variiert werden. So muss z.B. der Pendelofen 25 nicht zwingend eine Aufheizzone 38a aufweisen. Die Formlinge 14 können auch in der Aufheizvorrichtung 20 bis auf die Sintertemperatur c aufgeheizt werden, so dass die Aufheizphase III im Pendelofen 25 wegfällt und die Formlinge sofort in die Sinterzone 38b des Pendelofens 25 gelangen und dort in Phase IV gesintert werden. Auch ist es denkbar, dass z.B. die Drehachse 37 ausserhalb und insbesondere oberhalb des Pendelofens 25 liegt.

## Patentansprüche

1. Verfahren zur Herstellung eines Zuschlagstoffes (12) aus blähbaren Grün-Formlingen (14) für Leichtbaustoffe, wobei die Grün-Formlinge (14) zunächst getrocknet (I) und aufgeheizt (II, III) werden, danach gesintert (IV) und auf eine ein Blähen (V) bewirkende Blähtemperatur (d) erhitzt werden, und danach so abgekühlt (VI) werden, dass sie in geblähter Form stabilisiert sind, **dadurch gekennzeichnet, dass** die Formlinge (14), zumindest während dem sie der Blähtemperatur (d) ausgesetzt sind, durch eine hin und her pendelnde Bewegung des sie aufnehmenden Behältnisses (24, 25) wechselseitig umgewälzt und durchmischt werden, wobei die Formlinge (14) im Behältnis (24, 25) verschiedene, durch Zwischenwände (40) thermisch voneinander getrennte Wärmezonen (38a, 38b, 38c, 38d) durchlaufen, wobei die Wärmezonen (38a, 38b, 38c, 38d) vorzugsweise direkt beheizt werden, und in einer als Blähzone (38c) ausgebildeten Wärmezone eine Temperatur (d) von insbesondere 800°C bis 1300°C erzeugt wird.

2. Verfahren nach Anspruch 1, **dadurch gekennzeichnet, dass** die Beschickung und die Entleerung des Behältnisses (24, 25) kontinuierlich ablaufen.

3. Verfahren nach Anspruch 1 oder 2, **dadurch gekennzeichnet, dass** die Formlinge (14) auf einer ungleichförmigen, insbesondere wellenförmig ausgestalteten Auflagefläche (35) einer Innenwand (34) des Behältnisses (24, 25) wechselseitige umgewälzt und durchmischt werden und insbesondere während und nach dem Blähen (V) durch einen sich erweiternden Abschnitt (36') eines Innenraumes (36) des Behältnisses (24) transportiert werden.

4. Verfahren nach einem der vorhergehenden Ansprüche, **dadurch gekennzeichnet, dass** die Formlinge (14) beim Trocknen (I) auf bis zu 200°C und beim Aufheizen (II, III) auf bis zu 800°C erwärmt werden.

5. Verfahren nach einem der vorhergehenden Ansprüche, **dadurch gekennzeichnet, dass** die Formlinge (14) nach dem wechselseitigen Umwälzen und Durchmischen bis auf Raumtemperatur (RT) abgekühlt werden (VII, VIII).

6. Verfahren nach einem der vorhergehenden Ansprüche, **dadurch gekennzeichnet, dass** das Trocknen (I), Aufheizen (II), Blähen (V) und Kühlen (VII, VIII) der Formlinge (14) in örtlich voneinander getrennten Verarbeitungsvorrichtungen (16, 20, 24 bzw. 25, 28) abläuft.

7. Verfahren nach Anspruch 6, **dadurch gekennzeichnet, dass** die Formlinge (14) gegen Wärmeverlust isoliert von einer Verarbeitungsvorrichtung (16, 20, 24 bzw. 25, 28) zur darauffolgenden Verarbeitungsvorrichtung (16, 20, 24 bzw. 25, 28) transportiert werden.

8. Verfahren nach einem der vorhergehenden Ansprüche, **dadurch gekennzeichnet, dass** für die Grün-Formlinge (14) Recyclingmaterial, wie z.B. Altglas, und/oder mineralische Stoffe und/oder RCP-Granulat und/oder Schlacke, Schlick, Flugasche oder dergleichen eingesetzt werden.

9. Vorrichtung zum Herstellen von Zuschlagstoffen (12) aus blähbaren Grün-Formlingen (14) für Leichtbaustoffe, welche aufeinanderfolgend eine Trockenvorrichtung (16), eine Aufheizvorrichtung (20), eine Sinter- und Blähvorrichtung (24) und eine Kühlvorrichtung (28) umfasst, **dadurch gekennzeichnet, dass** die Sinter- und Blähvorrichtung (24) als ein Pendelofen (25) ausgestaltet ist, wobei der Pendelofen (25) in Förderrichtung beabstandet angeordnete Zwischenwände (40) mit Durchlassöffnungen (42) aufweist, welche den Innenraum (36, 36') des Pendelofens (25) in verschiedene Wärmezonen (38a, 38b, 38c, 38d) unterteilen, wobei die Wärmezonen (38a, 38b, 38c, 38d) vorzugsweise direkt beheizt sind.

10. Vorrichtung nach Anspruch 9, **dadurch gekennzeichnet, dass** der Pendelofen (25) einen Einlass (E) und einen Auslass (A) aufweist, welche eine Förderrichtung bestimmen, und dass der Pendelofen (25) eine etwa in Förderrichtung verlaufende Drehachse (37) aufweist, um welche der Pendelofen (25) schwenkbar gelagert ist.

11. Vorrichtung nach Anspruch 9 oder 10, **dadurch gekennzeichnet, dass** der Pendelofen (25) einen sich gegen den Auslass (A) hin, insbesondere trichterförmig, erweiternden Innenraum (36, 36') aufweist.

12. Vorrichtung nach einem der Ansprüche 9 bis 11, **dadurch gekennzeichnet, dass** der Pendelofen (25) eine Innenwand (34) aufweist, die zumindest im Bereich einer Auflagefläche (35), auf welcher die Formlinge während des Pendelns aufliegen, ungleichmässig, insbesondere wellenförmig, ausgestaltet ist.

13. Vorrichtung nach Anspruch 12, **dadurch gekennzeichnet, dass** die Auflagefläche (35) des Pendelofens (25) in Förderrichtung bezüglich einer Horizontalebene eine Neigung von bis zu 10°, vorzugsweise von 2 bis 5° aufweist.

14. Vorrichtung nach einem der Ansprüche 9 bis 13, **dadurch gekennzeichnet, dass** zwei örtlich voneinander getrennte Verarbeitungsvorrichtungen (16, 20', 24 bzw. 25, 28) durch einen wärmeisolierten Hohlraum (30) miteinander verbunden sind.

15. Vorrichtung nach einem der Ansprüche 9 bis 14, **dadurch gekennzeichnet, dass** die Verarbeitungsvorrichtungen (16, 20', 24 bzw. 25, 28) als getrennte Vorrichtungen ausgestaltet sind, wobei die Trockenvorrichtung (16) insbesondere als ein Bandtrockner, die Aufheizvorrichtung (20) insbesondere als ein Drehrohrofen und die Kühlvorrichtung (28) vorzugsweise als ein Drehrohrkühler ausgestaltet ist.

## Claims

1. Process for producing an aggregate (12) from expandable green bodies (14) for lightweight construction materials, the green bodies (14) firstly being dried (I) and heated (II, III), then sintered (IV) and heated to an expansion temperature (d) which effects expansion (V), and then being cooled (VI) in such a way that they are stabilized in the expanded form, **characterized in that** the bodies (14), at least while they are exposed to the expansion temperature (d), are rolled around and mixed with one another by means of a reciprocating pendulum motion of the container (24, 25) which holds them, the bodies (14) passing through various heating zones (38a, 38b, 38c, 38d), which are thermally separated from one another by partitions (40), in the container (24, 25), the heating zones (38a, 38b, 38c, 38d) preferably being heated directly, and a temperature (d) of in particular 800°C to 1300°C being generated in a heating zone which is formed as expansion zone (38c).

2. Process according to claim 1, **characterized in that** the feeding and emptying of the container (24, 25) takes place continuously.

3. Process according to claim 1 or 2, **characterized in that** the bodies (14) are rolled around and mixed with one another on a bearing surface (35), which is non-uniform, in particular is of wave-like configuration, of an inner wall (34) of the container (24, 25), and in particular during and after the expansion (V) are conveyed through a widening section (36') of an interior (36) of the container (24).

4. Process according to one of the preceding claims, **characterized in that** the bodies (14) are heated to up to 200°C during the drying (I) and are heated to up to 800°C during the heating (II, III).

5. Process according to one of the preceding claims, **characterized in that** the bodies (14) are cooled (VII, VIII) to room temperature (RT) after they have been rolled around and mixed with one another.

6. Process according to one of the preceding claims, **characterized in that** the drying (I), heating (II), expansion (V) and cooling (VII, VIII) of the bodies (14) take place in spatially separate processing devices (16, 20, 24 or 25, 28).

7. Process according to claim 6, **characterized in that** the bodies (14) are conveyed from one processing device (16, 20, 24 or 25, 28) to the next processing device (16, 20, 24 or 25, 28) in such a manner as to be insulated against heat loss.

8. Process according to one of the preceding claims, **characterized in that** recycling material, such as for example cullet, and/or mineral materials and/or RCP granules and/or slag, slip, fly ash or the like are used for the green bodies (14).

9. Device for producing aggregates (12) from expandable green bodies (14) for lightweight construction materials, which successively comprises a drying device (16), a heating device (20), a sintering and expansion device (24) and a cooling device (28), **characterized in that** the sintering and expansion device (24) is designed as a pendulum kiln (25), the pendulum kiln (25) having partitions (40) with through-openings (42) which are arranged spaced apart from one another in the conveying direction and divide the interior (36, 36') of the pendulum kiln (25) into different heating zones (38a, 38b, 38c, 38d), the heating zones (38a, 38b, 38c, 38d) preferably being directly heated.

10. Device according to claim 9, **characterized in that** the pendulum kiln (25) has an inlet (E) and an outlet (A), which define a conveying direction, and **in that** the pendulum kiln (25) has an axis of rotation (37) which runs approximately in the conveying direction and about which the pendulum kiln (25) is pivotably mounted.

11. Device according to claim 9 or 10, **characterized in that** the pendulum kiln (25) has an interior (36, 36') which widens, in particular in the shape of a funnel, towards the outlet (A).

12. Device according to one of claims 9 to 11, **characterized in that** the pendulum kiln (25) has an inner wall (34) which, at least in the region of a bearing surface (35) on which the bodies rest during the pendulum motion, is of non-uniform, in particular wavy, configuration.

13. Device according to claim 12, **characterized in that** the bearing surface (35) of the pendulum kiln (25) has an inclination of up to 10°, preferably of 2 to 5°, with respect to a horizontal plane in the conveying direction.

14. Device according to one of claims 9 to 13, **characterized in that** two processing devices (16, 20', 24 or 25, 28) which are locally separate from one another are connected to one another by a thermally insulated cavity (30).

15. Device according to one of claims 9 to 14, **characterized in that** the processing devices (16, 20', 24 or 25, 28) are designed as separate devices, the drying device (16) being configured in particular as a belt dryer, the heating device (20) being configured in particular as a rotary tubular kiln and the cooling device (28) preferably being configured as a rotary tubular cooler.

## Revendications

1. Procédé de fabrication d'un granulat (12) en préformes crues gonflables (14) pour des matériaux de construction légers, moyennant quoi les préformes crues (14) sont d'abord séchées (I) et chauffées (II, III), puis frittées (IV) et chauffées à une température de gonflage (d) provoquant un gonflage (V), et sont ensuite refroidies (VI) de sorte à être stabilisées sous la forme gonflée, **caractérisé en ce que** les préformes (14), au moins pendant qu'elles sont soumises à la température de gonflage (d), sont retournées et mélangées par un mouvement pendulaire en va-et-vient du récipient qui les contient (24, 25), moyennant quoi les préformes (14) traversent dans le récipient (24, 25) différentes zones de chauffage (38a, 38b, 38c, 38d) séparées thermiquement les unes des autres par des cloisons intermédiaires (40), moyennant quoi les zones de chauffage (38a, 38b, 38c, 38d) sont chauffées de préférence directement et dans une zone de chauffage configurée comme zone de gonflage (38c) est produite une température (d) en particulier de 800 °C à 1300 °C.

2. Procédé selon la revendication 1, **caractérisé en ce que** l'alimentation et le vidage du récipient (24, 25) se déroulent continûment.

3. Procédé selon la revendication 1 ou 2, **caractérisé en ce que** les préformes (14) sont renversées alternativement et mélangées sur une surface d'appui (35) irrégulière, en particulier configurée de manière ondulée, d'une paroi intérieure (34) du récipient (24, 25), et qu'en particulier elles sont transportées pendant et après le gonflage (V) à travers une section qui s'élargit (36') d'un espace intérieur (36) du récipient (24).

4. Procédé selon l'une quelconque des revendications précédentes, **caractérisé en ce que** les préformes (14) sont chauffées jusqu'à 200 °C lors du séchage (I) et jusqu'à 800 °C lors du chauffage (II, III).

5. Procédé selon l'une quelconque des revendications précédentes, **caractérisé en ce qu'**après le renversement réciproque et le mélange, les préformes (14) sont refroidies (VII, VIII) jusqu'à la température ambiante (RT).

6. Procédé selon l'une quelconque des revendications précédentes, **caractérisé en ce que** le séchage (I), le chauffage (II), le gonflage (V) et le refroidissement (VII, VIII) des préformes (14) se déroulent dans des dispositifs de traitement (16, 20, 24, respectivement 25, 28) spatialement séparés les uns des autres.

7. Procédé selon la revendication 6, **caractérisé en ce que** les préformes (14) sont transportées, isolées contre les pertes de chaleur, d'un dispositif de traitement (16, 20, 24, respectivement 25, 28) au dispositif de traitement (16, 20, 24, respectivement 25, 28) suivant.

8. Procédé selon l'une quelconque des revendications précédentes, **caractérisé en ce que**, pour les préformes crues (14), est utilisé du matériau de recyclage, comme par exemple du verre de récupération et / ou des produits minéraux et / ou du granulé RCP et / ou des scories, de la vase, des cendres volantes ou similaires.

9. Dispositif pour la fabrication de granulats(12) en préformes crues gonflables (14) pour des matériaux de construction légers, qui comprend successivement un dispositif de séchage (16), un dispositif de chauffage (20), un dispositif de frittage et de gonflage (24) et un dispositif de refroidissement (28), **caractérisé en ce que** le dispositif de frittage et de gonflage (24) est configuré comme un four oscillant (25), moyennant quoi le four oscillant (25) comporte, dans la direction du transport, des cloisons intermédiaires (40) disposées à intervalles, avec des ouvertures de passage (42), lesquelles divisent l'espace intérieur (36, 36') du four oscillant (25) en différentes zones de chauffage (38a, 38b, 38c, 38d), moyennant quoi les zones de chauffage (38a, 38b, 38c, 38d) sont chauffées de préférence directement.

10. Dispositif selon la revendication 9, **caractérisé en ce que** le four oscillant (25) comporte une entrée (E) et une sortie (A) qui déterminent un sens du transport, et **en ce que** le four oscillant (25) présente un axe de rotation (37) s'étendant à peu près dans la direction du transport, autour duquel le four oscillant (25) est monté oscillant.

11. Dispositif selon la revendication 9 ou 10, **caractérisé en ce que** le four oscillant (25) comporte un espace intérieur (36) s'élargissant en direction de la sortie (A), en particulier en forme d'entonnoir.

12. Dispositif selon l'une quelconque des revendications 9 à 11, **caractérisé en ce que** le four oscillant (25) comporte une paroi intérieure (34), qui est configurée de façon irrégulière, en particulier ondulée au moins dans la zone d'une surface d'appui (35) sur laquelle les préformes reposent pendant l'oscillation.

13. Dispositif selon la revendication 12, **caractérisé en ce que** la surface d'appui (35) du four oscillant (25) présente dans la direction du transport une inclinaison de jusqu'à 10°, de préférence de 2 à 5° par rapport à un plan horizontal.

14. Dispositif selon l'une quelconque des revendications 9 à 13, **caractérisé en ce que** deux dispositifs de traitement (16, 20', 24, respectivement 25, 28) séparés spatialement l'un de l'autre sont reliés ensemble par une cavité calorifugée (30).

15. Dispositif selon l'une quelconque des revendications 9 à 14, **caractérisé en ce que** les dispositifs de traitement (16, 20', 24, respectivement 25, 28) sont configurés comme dispositifs séparés, moyennant quoi le dispositif de séchage (16) est configuré en particulier comme un séchoir à bande, le dispositif de chauffage (20) est configuré en particulier comme un four tubulaire tournant et le dispositif de refroidissement (28) est configuré de préférence comme un refroidisseur tubulaire tournant.
